# EUROPÄISCHE PATENTSCHRIFT

(11) **EP 3 719 335 B1**
(45) Veröffentlichungstag und Bekanntmachung des Hinweises auf die Patenterteilung: **12.10.2022**
(21) Anmeldenummer: 19166941.5
(22) Anmeldetag: 03.04.2019
(51) Int. Cl.: F16D 3/78, F16D 3/79

(54) **LAMELLENPAKET, HERSTELLUNGSVERFAHREN, LAMELLENKUPPLUNG UND INDUSTRIE-APPLIKATION**
LAMINATE, METHOD FOR PRODUCING SAME, LAMINATE COUPLING AND INDUSTRIAL APPLICATION
PAQUET DE LAMELLES, PROCÉDÉ DE FABRICATION, EMBRAYAGE À LAMELLE ET APPLICATION INDUSTRIELLE

(43) Veröffentlichungstag der Anmeldung: 07.10.2020
(73) Patentinhaber: Flender GmbH, 46395 Bocholt (DE)
(72) Erfinder: Jansen, Andre, 46325 Borken (DE); Kleinewegen, Stefan, 46395 Bocholt (DE); Reidl, Marcel, 48691 Vreden (DE); Scheithauer, Günter, 48691 Vreden (DE)
(74) Vertreter: Michalski Hüttermann & Partner Patentanwälte mbB

(56) Entgegenhaltungen:
- EP-A1- 0 702 164
- EP-A1- 2 565 481
- WO-A1-2014/203671
- DE-A1-102010 053 691

## Beschreibung

Die Erfindung betrifft ein Lamellenpaket, das für einen Einsatz in einer Lamellenkupplung geeignet ist. Die Erfindung betrifft auch ein Herstellungsverfahren für ein entsprechendes Lamellenpaket. Gleichermaßen betrifft die Erfindung eine Lamellenkupplung, die ein erfindungsgemäßes Lamellenpaket nutzt und eine Industrie-Applikation, die mit einer solchen Lamellenkupplung ausgestattet ist.

Aus der Druckschrift EP 0 190 571 A2 ist eine Lamellenkupplung bekannt, die ein erstes Paket mit Außenlamellen und ein zweites Paket mit Innenlamellen aufweist. Die Außenlamellen sind dabei als Kombination von Segmenten ausgebildet, die Außenzungen mit Durchbrüchen für Bolzen ausgebildet sind.

US 4,449,621 A offenbart segmentierte Kupplungsscheiben, die aus einer Mehrzahl an Segmenten zusammengesetzt sind. Die Segmente weisen an ihren Enden Ausnehmungen und Vorsprünge auf, die ein gegenseitiges Verbinden der Segmente erlauben. Dabei wird ein Formschluss zwischen den Segmenten verwirklicht Siehe EP0702164 auch als Stand der Technik.

Bei einer Vielzahl an technischen Anwendungen, in denen Lamellenkupplungen eingesetzt werden, besteht Bedarf an Lamellenkupplungen mit einer hohen mechanischen Leistungsfähigkeit, insbesondere an einem hohen Nenndrehmoment im Betrieb. Gleichzeitig besteht die Anforderung, leistungsstarke Lamellenkupplungen platzsparend auszuführen. Ebenso werden eine hohe Zuverlässigkeit, eine hohe Lebensdauer und eine einfache, schnelle und wirtschaftliche Herstellung für solche Lamellenkupplungen gefordert. Der vorliegenden Erfindung liegt die Aufgabe zugrunde, eine Lamellenkupplung bereitzustellen, die in zumindest einem der skizzierten Aspekte eine Verbesserung bietet.

Die Aufgabenstellung wird durch das erfindungsgemäße Lamellenpaket gemäss den beiligenden Ansprüchen gelöst, das zu einem Einsatz in einer Lamellenkupplung geeignet ausgebildet ist. Das Lamellenpaket weist eine Mehrzahl an geschichtet angeordneten Lamellensegmenten auf, die im Wesentlichen zum Lamellenpaket zusammengesetzt sind. Die Lamellensegmente sind als Ringsegmente ausgebildet und sind dazu geeignet, im montierten eine umlaufende geschlossene Außenkontur, wie beispielsweise bei einer Ringlamelle, auszubilden. Die Lamellensegmente weisen jeweils eine Mehrzahl an Ausnehmungen auf, die im montierten Zustand zueinander fluchtend angeordnet sind. Die Ausnehmungen sind jeweils dazu ausgebildet, eine Hülse aufzunehmen. Durch die geschichtete Anordnung der Lamellensegmente und der fluchtenden Anordnung der Ausnehmungen unterschiedlicher Lamellensegmente erstreckt sich eine Hülse im erfindungsgemäßen Lamellenpaket durch die aufeinander liegenden, also geschichteten, Lamellensegmente. Durch das Aufnehmen von mindestens einer Hülse werden Lamellensegmente gegenseitig miteinander verbunden. Die Lamellensegmente sind somit dazu ausgebildet, im Betrieb einer Lamellenkupplung das eingeleitete Drehmoment in Form einer Zugbeanspruchung aufzunehmen. Erfindungsgemäß weist zumindest ein Lamellensegment im Lamellenpaket mindestens drei Ausnehmungen auf, die jeweils zum Aufnehmen einer Hülse ausgebildet sind. Dies erlaubt es, zwei benachbarte Lamellenpakete über eine wählbare Anzahl an Hülsen miteinander zu verbinden. Infolgedessen besteht ein erhöhter Grad an konstruktiver Freiheit bei einem Zusammensetzen mehrerer Lamellensegmente als Ringsegmente zu einer umlaufenden geschlossenen Außenkontur, also einem Lamellenpaket, zusammenzusetzen. Insbesondere ist so eine kompakte Anordnung von Lamellensegmenten erzielbar, die gleichzeitig ein hohes Maß an mechanischer Beanspruchbarkeit bietet.

In einer Ausführungsform des beanspruchten Lamellenpakets weist dieses ein erstes und ein zweites Lamellensegment auf, die zueinander benachbart positioniert sind. Das erste und zweite Lamellenpaket sind teilweise überlappend angeordnet und sind an mindestens zwei Ausnehmungen über je eine Hülse miteinander verbunden. Durch die Hülse wird zwischen dem ersten und zweiten Lamellensegment ein Formschluss hergestellt. Durch die teilweise überlappende Anordnung des ersten und zweiten Lamellensegments sind diese mit weiteren Lamellensegmenten verbindbar. Somit sind die als Ringsegmente dienenden Lamellensegmente gegenseitig miteinander zu einer geschlossenen umlaufenden Außenkontur verbindbar. Folglich ist das Lamellenpaket in einfacher Weise aus Lamellensegmenten und Hülsen zusammensetzbar, also herstellbar.

Des Weiteren muss das erste Lamellensegment das zweite Lamellensegment entlang einer Umfangsrichtung des Lamellenpakets überragen. Dabei überragt das erste Lamellensegment das zweite Lamellensegment zumindest soweit, dass zumindest eine Ausnehmung, insbesondere an einem überragenden Ende des ersten Lamellensegments, mit keiner Ausnehmung des zweiten Lamellensegments fluchtet. Die zumindest eine über das zweite Lamellensegment ragende Ausnehmung des ersten Lamellensegments ist somit mit weiteren Lamellensegmenten des Lamellenpakets verbindbar. Auch hierdurch ist wählbar, mit welcher Anzahl an Hülsen das erste und zweite Lamellenpaket miteinander verbunden werden. Gleichermaßen ist eine weitere Verbindung mit weiterem Lamellenpaketen somit vorgebbar. Die Lamellensegmente sind infolgedessen teilweise überlappend miteinander verbindbar. Ein so herstellbarer Verbund aus Lamellensegmenten bietet bei reduzierten Abmessungen ein hohes Maß an mechanischer Beanspruchbarkeit. Die mechanische Beanspruchbarkeit umfasst dabei ein erhöhtes Nenndrehmoment, mit dem eine Lamellenkupplung, die über ein entsprechendes Lamellenpaket verfügt, in einem bestimmungsgemäßen Betrieb betreibbar ist. Das beanspruchte Lamellenpaket weist bei gleicher Steifigkeit der Bolzenverbindung gegenüber einem Lamellenpaket in Laschenlamellenbauweise eine reduzierte Dicke.

Ferner kann das Lamellenpaket insgesamt sechs, acht, zehn oder zwölf Hülsen aufweisen. Dementsprechend ist das Lamellenpaket mit je drei, vier, fünf oder sechs Befestigungsmitteln an einem ersten und zweiten Flansch einer Lamellenkupplung verbunden. Je höher die Anzahl an Befestigungsmitteln, die im Lamellenpaket aufnehmbar sind, umso höher ist das übertragbare Drehmoment und umso geringer die Verlagerungsfähigkeit des Lamellenpakets. Das beanspruchte Lamellenpaket ist folglich in einfacher Weise skalierbar und deshalb für ein breites Spektrum an Einsatzgebieten geeignet.

In einer weiteren Ausführungsform des beanspruchten Lamellenpaketes ist, in einer Radialrichtung betrachtet, zwischen zwei benachbarten Hülsen ein Bogenabschnitt des Lamellenpakets ausgebildet. In einer Schicht des Lamellenpakets liegt deshalb zwischen zwei Hülsen ein lasttragender Abschnitt eines Lamellensegments oder ein Leerraum. Ein Leerraum liegt vor, wenn in der entsprechenden Schicht an die beiden Hülsen in Ausnehmungen an Enden unterschiedlicher Lamellensegments aufgenommen sind. Bezogen auf das gesamte Lamellenpaket ergibt sich somit ein Lamellen-Füllgrad des Lamellenpakets. Der Lamellenfüllgrad ist ein Quotient und basiert im Zähler auf der Anzahl an vorhandenen lasttragenden Abschnitten im gesamten Lamellenpaket. Weiter basiert der Lamellenfüllgrad im Nenner auf der Anzahl an theoretisch vorhandenen lasttragenden Abschnitten, wenn die Lamellensegmente durch einstückige Ringlamellen ersetzt wären. Dies entspricht der Anzahl an Hülsen im Lamellenpaket multipliziert mit der Anzahl an Schichten im Lamellenpaket. Nach einer Ausführungsform des beanspruchten Lamellenpakets weist dieses einen Lamellenfüllgrad von mindestens 60% auf. Je höher der Lamellenfüllgrad ist, umso ähnlicher ist das beanspruchte Lamellenpaket mechanisch einem gleich dimensionierten Lamellenpaket, das aus einstückigen Ringlamellen zusammengesetzt ist. Im Gegensatz zur beanspruchten Lösung bietet ein Lamellenpaket in Laschenlamellenbauweise nur einen Lamellenfüllgrad von höchstens 50%. Die beanspruchte Lösung erlaubt es, Lamellenpakete herzustellen, die in ihren mechanischen Eigenschaften solchen aus einstückigen Ringlamellen nahekommen, jedoch aus einfach herzustellenden Lamellensegmenten wirtschaftlich herstellbar sind. Das beanspruchte Lamellenpaket bietet dabei ein hohes Maß an Kosteneffizienz.

Ferner kann im Lamellenpaket zumindest eine Hülse aufgenommen sein, die einen Querschnitt aufweist, der von einer Kreisform abweicht. Dementsprechend weisen die Ausnehmungen in den Lamellensegmenten auch eine Form auf, die von einer Kreisform abweicht und im Wesentlichen mit dem Querschnitt der Hülse korrespondiert. Dadurch wird zwischen der Hülse und den Lamellensegmenten ein Formschluss hergestellt. Der Formschluss zwischen den Lamellensegmenten und der Hülse verhindert im Betrieb ein Drehen der Hülse, was zu einem erhöhten Verschleiß der Lamellensegmente führen kann. Darüber hinaus kann der Kragen der Hülse zumindest einen geradlinigen Abschnitt aufweisen, der als Knickkante dient. Dadurch wird die Spannungsverteilung an einem linienförmigen Kontakt zwischen einer Decklamelle des Lamellenpakets und der Hülse gleichmäßiger, die sich ergibt, wenn das Lamellenpaket einen Versatz aufnimmt.

In einer weiteren Ausführungsform des beanspruchten Lamellenpakets ist die Hülse als Kragenhülse ausgebildet. Im montierten Zustand stützt sich ein Kragen der Kragenhülse auf einer Stirnseite des Lamellenpakets ab und gewährleistet im Bereich der Ausnehmungen eine gleichmäßige Einleitung einer Drucckraft, die von einem in der Hülse aufgenommenen Befestigungsmittel auf das Lamellenpaket ausgeübt wird. Die Kragenhülse kann auch an beiden Enden einen Kragen aufweisen. Dazu kann die Kragenhülse mehrteilig ausgebildet sein. Alternativ kann ein zweiter Kragen durch Verpressen hergestellt werden.

Ferner kann das Lamellenpaket ausschließlich Lamellensegmente aufweisen, die über eine gleiche Anzahl an Ausnehmungen verfügen. Des Weiteren können die Lamellensegmente baugleich ausgebildet sein. Hierdurch wird das Prinzip einer Gleichteilverwendung verwirklicht, was wiederum ein Herstellen des beanspruchten Lamellenpakets vereinfacht und beschleunigt. Ebenso erlaubt eine derartige Gleichteilverwendung eine einfache Automatisierung der Herstellung des beanspruchten Lamellenpakets. Darüber hinaus kann das Lamellenpaket eine Anzahl an Hülsen aufweisen, die einem ganzzahligen Vielfachen der Anzahl an Ausnehmungen in einem Lamellensegment entspricht. Beispielsweise kann ein Lamellenpaket mit sechs Hülsen je Schicht zwei Lamellensegmente aufweisen, die jeweils drei Ausnehmungen aufweisen. Durch ein rotatorisch versetztes Stapeln entsprechender Schichten ist in besonders einfacher Weise ein Lamellenpaket herstellbar, das ein hohes Maß an mechanischer Beanspruchbarkeit bietet. Die hohe mechanische Beanspruchbarkeit wird unter anderem dadurch hervorgerufen, dass durch den rotatorisch versetztes Stapeln eine im Wesentlichen gleichmäßige Lastverteilung an den lasttragenden Abschnitten ergibt.

Alternativ oder ergänzend kann das Lamellenpaket Lamellensegmente aufweisen, die über eine unterschiedliche Anzahl an Ausnehmungen verfügen. Beispielsweise können Lamellensegmente mit drei Ausnehmungen und Lamellensegmente mit vier Ausnehmungen kombiniert werden. Eine solche Kombination von Lamellensegmenten mit unterschiedlicher Anzahl an Ausnehmungen kann je Schicht oder schichtübergreifend erfolgen. Infolgedessen sind Lamellenpakete in einer größeren Vielfalt in einfacher Weise herstellbar. Beispielsweise können je Schicht zwei Lamellensegmente mit drei Ausnehmungen und ein Lamellensegment mit vier Ausnehmungen zu einem Lamellenpaket mit zehn Hülsen kombiniert werden. Dementsprechende Lamellensegmente sind bei geringem Materialverschnitt aus einem Rohblech herstellbar. Geometrisch komplexe Lamellenpakete, die eine erhöhte Anzahl an Hülsen aufweisen, sind somit in kosteneffizienter Weise herstellbar.

Die zugrundeliegende Aufgabenstellung wird auch durch das erfindungsgemäße Verfahren zum Herstellen eines Lamellenpakets gelöst. Die damit herzustellenden Lamellenpakete sind für einen Einsatz in einer Lamellenkupplung ausgelegt und ausgebildet. Das Verfahren umfasst einen ersten Schritt, in dem ein Rohblech bereitgestellt wird, aus dem Lamellensegmente für das Lamellenpaket herzustellen sind. In einem weiteren Schritt erfolgt ein Bestimmen eines Trennmusters, das auf das Rohblech anzuwenden ist. Das Trennmuster ist als geometrische Form ausgebildet, durch die eine Form der herzustellenden Lamellensegmente festgelegt wird. Das Trennmuster kann dabei auf dem Rohblech angezeichnet werden oder als Bearbeitungsanweisung für eine Werkzeugmaschine bereitgestellt werden, mit der das Rohblech zu bearbeiten ist. Es erfolgt ein Anwenden des Trennmusters auf das Rohblech, durch das die Form für eine Mehrzahl an Lamellensegmenten bestimmt wird. In einem weiteren Schritt wird ein Heraustrennen der Mehrzahl an Lamellensegmenten aus dem Rohblech durchgeführt. Ein solches Heraustrennen ist beispielsweise mittels Stanzen, Schneidbrennen oder Laserschneiden möglich.

Erfindungsgemäß sind die so hergestellten Lamellensegmente als Ringsegmente ausgebildet, die zu einem Zusammensetzen zu einem Lamellenpaket geeignet sind. Jedes der Lamellensegmente weist ferner mindestens drei Ausnehmungen auf. In einem montierten Zustand eines Lamellenpakets sind dessen Hülsen in den Ausnehmungen in den Lamellensegmenten aufgenommen. Die Verwendung von Lamellensegmenten mit mindestens drei Ausnehmungen für Hülsen erlaubt es, ein entsprechendes Lamellenpaket je Schicht in einer Differentialbauweise herzustellen. Ferner ist das beanspruchte Herstellungsverfahren schnell und kosteneffizient umsetzbar.

Des Weiteren kann das Trennmuster, basierend auf dem die Mehrzahl an Lamellensegmenten aus dem Rohblech herausgetrennt wird, ineinander verschachtelt angeordnete Konturen von Lamellensegmenten aufweisen. Die Konturen der Lamellensegmente sind derartig zueinander platziert, dass diese ineinandergreifen und so ein Materialverschnitt beim Heraustrennen minimiert wird. Infolgedessen wird die hohe Arbeitsgeschwindigkeit des beanspruchten Verfahrens mit einer hohen Materialausnutzung verbunden, was die Wirtschaftlichkeit des Herstellungsverfahrens weiter steigert. Infolgedessen wiederum ist beim beanspruchten Verfahren eine Verwendung von besonders leistungsfähigen und gleichzeitig kostenintensiven Materialien kosteneffizient. Insbesondere kann das Rohblech aus einem kaltgewalzten nichtrostenden Stahl, einem Edelstahl, einem Faserverbundwerkstoff, beispielsweise glasfaserverstärktem Kunststoff oder kohlefaserverstärktem Kunststoff, oder einem Faser-Metall-Laminat, hergestellt sein. Die Verwendung entsprechender leistungsfähiger Materialien steigert wiederum die mechanische Beanspruchbarkeit, Zuverlässigkeit und Lebensdauer der damit hergestellten Lamellenpakete.

Die beschriebene Aufgabenstellung wird gleichermaßen durch die erfindungsgemäße Lamellenkupplung gelöst. Die Lamellenkupplung umfasst einen ersten Flansch, der mit einer Eingangswelle verbunden ist, und einen zweiten Flansch, der mit einer Ausgangswelle verbunden ist. Die Lamellenkupplung ist zu einer Drehmomentübertragung von der Eingangswelle auf die Ausgangswelle ausgebildet und weist hierzu ein Lamellenpaket auf. Das Lamellenpaket ist lösbar mit dem ersten und zweiten Flansch verbunden und dazu ausgebildet, ein am ersten Flansch vorliegendes Drehmoment auf dem zweiten Flansch zu übertragen. Das Lamellenpaket ist hierbei gemäß zumindest einer der oben skizzierten Ausführungsformen ausgebildet. Alternativ oder ergänzend ist das in der erfindungsgemäßen Lamellenkupplung eingesetzte Lamellenpaket nach einer Ausführungsform des oben dargestellten Herstellungsverfahrens hergestellt. Eine derartige Lamellenkupplung bietet ein hohes Maß an mechanischer Beanspruchbarkeit und ist kompakt ausgebildet. Ferner weist eine solche Lamellenkupplung eine erhöhte Zuverlässigkeit und Lebensdauer auf und ist in einfacher Weise herstellbar.

Ebenso wird die skizzierte Aufgabenstellung durch eine erfindungsgemäße Industrie-Applikation gelöst. Die Industrie-Applikation weist eine Antriebseinheit auf, die über eine Ausgangswelle verfügt, über die Drehmoment auf eine Abtriebseinheit zu übertragen ist. Die Ausgangswelle ist über eine Lamellenkupplung mit einer Eingangswelle drehmomentübertragend verbunden, die wiederum zu einer Abtriebseinheit gehört. Die Antriebseinheit kann beispielsweise als Elektromotor, Verbrennungsmotor oder Hydraulikmotor ausgebildet sein. Die Abtriebseinheit kann als mechanische Anwendung ausgebildet sein, so dass die Industrie-Applikation beispielsweise als Mühle, Wälzmühle, Zementmühle, Zuckermühle, Extruder, Förderanlage, Gesteinsbrecher, Walzenbrecher, Walzenpresse, Rollpresse, Pumpe, Ventilator, Verdichter, Schiffsantrieb, Hebevorrichtung, Müllpresse oder Schrottpresse ausgebildet ist.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Ansicht eines Lamellensegments gemäß einer ersten Ausführungsform des beanspruchten Lamellenpakets;
- FIG 2: eine Zusammenbauzeichnung der ersten Ausführungsform des beanspruchten Lamellenpaketes;
- FIG 3: eine schematische Ansicht eines Lamellensegments gemäß einer zweiten Ausführungsform des beanspruchten Lamellenpakets;
- FIG 4: eine Lamellenpaket gemäß der zweiten Ausführungsform in einem Längsschnitt;
- FIG 5: eine schematische Schrägansicht einer ersten Ausführungsform des beanspruchten Herstellungsverfahrens;
- FIG 6: einen schematischen Aufbau einer Ausführungsform der beanspruchten Lamellenkupplung;
- FIG 7: eine schematische Darstellung einer Ausführungsform einer beanspruchten Industrie-Applikation.

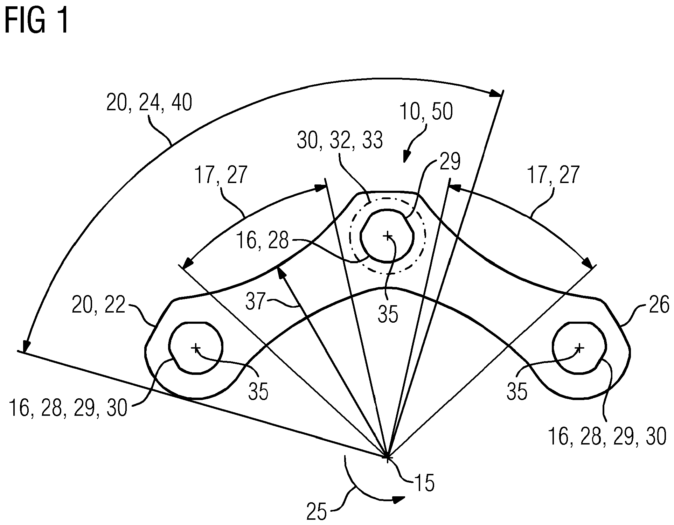

FIG 1 zeigt schematisch eine Ansicht eines Lamellensegments 20, das in einem Lamellenpaket 10 einsetzbar ist, das wiederum in einer Kupplung 50 verwendet werden kann. Das Lamellensegment 20 dient im Lamellenpaket 10 beispielweise als erstes Lamellensegment 22 und ist im Wesentlichen bogenförmig ausgebildet. Das Lamellensegment 20 weist, betrachtet um eine Hauptdrehachse 15 der Kupplung 50, eine Mehrzahl an Ausnehmungen 28 auf, deren Mittelpunkte im Wesentlichen auf einem Außenradius 37 des Lamellensegment 20 angeordnet sind. Die Ausnehmungen 28 sind dazu ausgebildet, in einem montierten Zustand des Lamellenpakets 10 jeweils eine Hülse 30 auszunehmen. Die Ausnehmungen 28 weisen zumindest abschnittsweise eine Nicht-Kreisform 29 auf, durch die im Betrieb der Kupplung 50 ein Drehen von nicht näher dargestellten Befestigungsmitteln 16 durch Formschluss verhindert. Ferner wird durch die Mittelpunkte der Ausnehmungen 28 auf dem Außenradius 37 des Lamellensegments 20 die Lage der jeweiligen Schraubenachse 35 der Befestigungsmittel 16 definiert. Das Lamellensegment 20 ist somit als Ringsegment 26 ausgebildet und mit weiteren baugleichen Lamellensegmenten 20 oder ähnlichen Lamellensegmenten zu einem Lamellenpaket 10 kombinierbar.

Ferner ist das Lamellensegment 20, das als erstes Lamellensegment 22 dient, mit einem nicht näher dargestellten aufliegenden zweiten Lamellensegment 24 über die Hülsen 30 verbunden. Das zweite Lamellensegment 24 überlappt mit dem ersten Lamellensegment 22 an zwei benachbarten Ausnehmungen 28, so dass ein Überlappungsbereich 40 ausgebildet ist. Das erste und zweite Lamellensegment 22, 24 überlappen somit teilweise. Abschnitte des Lamellensegments 20, die zwischen zwei Ausnehmungen 28 liegen, bilden Bogenabschnitte 17, die als lasttragende Abschnitte 27 dienen. Die lasttragenden Abschnitte 27 werden durch ein Drehmoment 25, das um die Hauptdrehachse 15 im Betrieb der Kupplung 10 ausgeübt wird, einer Zugbeanspruchung unterworfen. Das Lamellensegment 20 ist im Wesentlichen als flächige Komponente ausgebildet und ist beispielswiese aus einem Blech herstellbar. Das Lamellensegment 20 ist infolgedessen kosteneffizient herstellbar und kann mit einer Mehrzahl an baugleichen oder ähnlichen Lamellensegmenten 20 zu einem Lamellenpaket 10 zusammengesetzt werden.

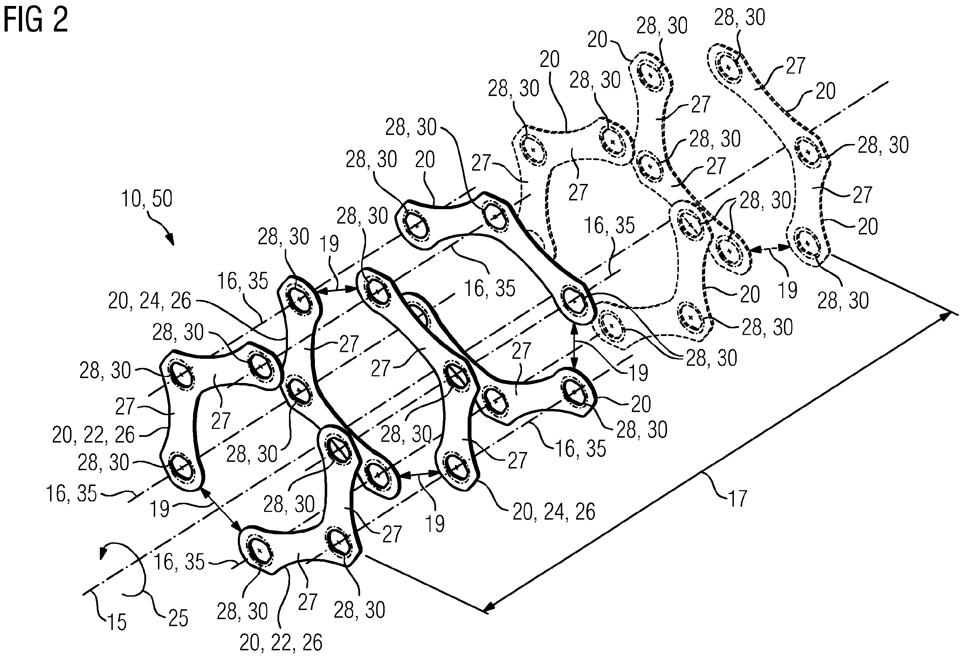

FIG 2 zeigt schematisch den Zusammenbau eines Lamellenpakets 10 aus einer Mehrzahl an Lamellensegmenten 20 aus FIG 1. Das Lamellenpaket 10 ist dazu ausgebildet, in einer nicht näher dargestellten Kupplung 50 verwendet zu werden. Die einzelnen Lamellensegmente 20 sind um eine Hauptdrehachse 15 des Lamellenpakets 10 ausgerichtet, um die im Betrieb einer Kupplung 50 ein Drehmoment 25 ausgeübt wird. Das Lamellenpaket 20 umfasst ein zwei erste Lamellensegmente 22, die baugleich ausgebildet sind. Jedes der ersten Lamellensegmente 22 weist drei Ausnehmungen 28 auf, zwischen denen jeweils ein lasttragender Abschnitt 27 ausgebildet ist. Die lasttragenden Abschnitte 27 werden durch das Drehmoment 25, das auf das Lamellenpaket 10 ausgeübt wird, einer Zugbeanspruchung unterworfen. Die Ausnehmungen 28 wiederum sind zu einem Aufnehmen einer Hülse 30 ausgebildet. Die ersten Lamellensegmente 22 bildet eine gemeinsame Lage oder Schicht des Lamellenpakets 10.

Ferner umfasst das Lamellenpaket 10 weitere Lamellensegmente 20, die schichtweise angeordnet sind. Das Lamellenpaket 10 weist zwei zweite Lamellensegmente 24 auf, die zusammen eine Lage oder Schicht des Lamellenpakets 10 bilden, die auf der durch die ersten Lamellensegmente 22 gebildete Lage oder Schicht aufliegt. Die zweiten Lamellensegmente 24 sind baugleich zu den ersten Lamellensegmenten 22 und weisen ebenfalls drei Ausnehmungen 28 mit dazwischenliegenden lasttragenden Abschnitten 27 auf. Die Ausnehmungen 28 in den zweiten Lamellensegmenten 24 sind auch dazu ausgebildet, eine Hülse 30 aufzunehmen. Die Ausnehmungen 28 der ersten und zweiten Lamellensegmente 22, 24 sind fluchtende ausgerichtet, so dass in diesen entsprechend eine gemeinsame Hülse 30 aufnehmbar ist. Die Ausnehmungen 28 sind entlang einer Schraubenachse 25 ausgerichtet, entlang der in der entsprechenden Hülse 30 ein Befestigungsmittel 16 lösbar aufnehmbar ist. Jedes der ersten Lamellensegmente 22 ist teilweise überlappend mit einem zweiten Lamellensegment 24 verbunden. Ein Leerraum 19, der in Umlaufrichtung zwischen den zweiten Lamellenpaketen 24 vorliegt, wird so von einem der ersten Lamellensegmente 22 überbrückt. Korrespondierend wird ein Leerraum 19 zwischen den zwei ersten Lamellenpaketen 22 durch ein zweites Lamellenpaket 24 überbrückt. Von einer Lage oder Schicht des Lamellenpakets 10 wird die Lage des Leerraums 19 zwischen den Lamellensegmenten 20, schrittweise gerastet durch die Lage der Ausnehmungen 28, um eine kleinste Teildrehung der Lamellensegmente 20, verschoben.

Dieser Aufbau setzt sich im Lamellenpaket 10 nach FIG 1 über eine Mehrzahl an Lagen oder Schichten mit Lamellensegmenten 20 fort. Die Lamellensegmente 20, also auch die ersten und zweiten Lamellensegmente 22, 24, sind im Wesentlichen als Ringsegmente 26 ausgebildet und bilden unter Beabstandung durch die Leerräume 19, je Lage oder Schicht eine unterbrochene Ringform. Der Aufbau des Lamellenpakets 10 in FIG 1 weist fünf Lagen oder Schichten auf. Entlang eines Bogensegments 17 betrachtet, sind in fünf Lagen oder Schichten vier lasttragende Abschnitte 27 angeordnet. Dies stellt eine bauliche Annäherung an ein Lamellenpaket dar, das ausschließlich aus durchgehend ringförmigen Lamellen hergestellt ist.

Bei fünf Lagen oder Schichten mit je sechs Ausnehmungen 28 und zwanzig vorhandenen lasttragenden Abschnitten 27 ergibt sich für das in FIG 1 dargestellte Lamellenpaket 10 ein Lamellenfüllgrad von 20/30, also 66,7%. Die Lamellensegmente 20 sind bei reduziertem Materialverschnitt aus einem Rohblech herstellbar, was eine schnelle und kosteneffiziente Produktion erlaubt. Insbesondere wird durch den Lamellenfüllgrad von mindestens 60% und die kostengünstige Herstellung ein besonders günstiges Verhältnis von mechanischer Beanspruchbarkeit und Kosten beim beanspruchten Lamellenpaket 10 erzielt.

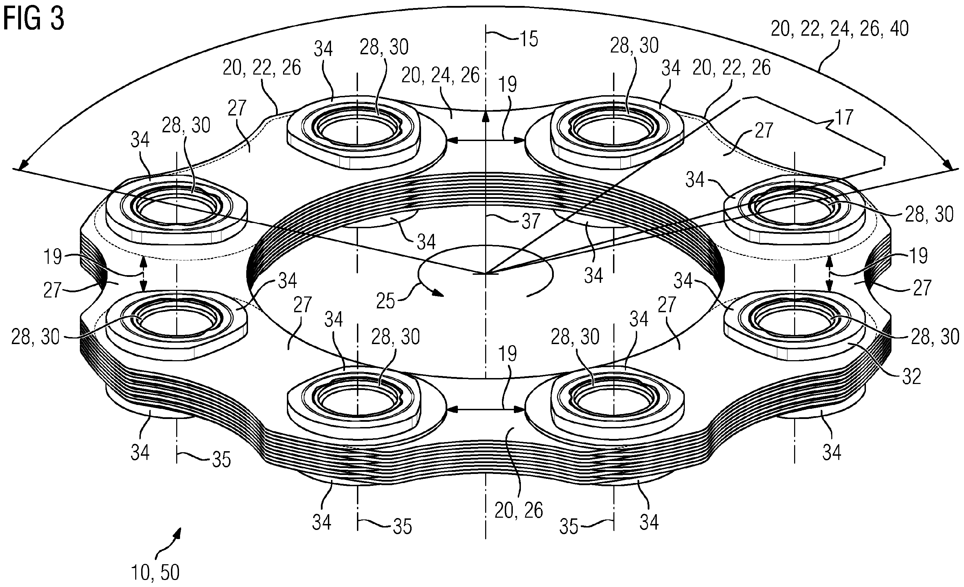

FIG 3 zeigt eine schematische Ansicht eines beanspruchten Lamellenpakets 10 gemäß einer zweiten Ausführungsform. Das Lamellenpaket 10 ist zur Verwendung in einer nicht näher abgebildeten Kupplung 50 ausgebildet und weist eine Mehrzahl an Lamellensegmenten 20 auf, die im Wesentlichen wie in FIG 2 als erste und zweite Lamellensegmente 22, 24 dienen. Im Gegensatz zur Ausführungsform nach FIG 2 weisen in FIG 3 die Lamellensegmente 20 vier Ausnehmungen 28 zum Aufnehmen von Hülsen 30 auf. Die ersten Lamellensegmente 22 sind als Ringsegmente 26 ausgebildet und bilden, unter Berücksichtigung von dazwischenliegenden Leerräumen 19, im Wesentlichen eine Ringform, die um eine Hauptdrehachse 15 des Lamellenpakets 10 ausgerichtet ist. Um die Hauptdrehachse 15 wird im Betrieb des Lamellenpakets 10 ein Drehmoment 25 ausgeübt. Die Lamellensegmente 20 im Aufbau nach FIG 3 sind ferner baugleich, also untereinander austauschbar, ausgebildet.

Zwischen zwei Ausnehmungen 28 ist jeweils ein lasttragender Abschnitt 27 ausgebildet, der im Wesentlichen als Bogenabschnitt 17 ausgebildet ist. An die lasttragenden Abschnitte 27 grenzen Ausnehmungen 28 an, die zum Aufnehmen von Hülsen 30 ausgebildet sind. Die Hülsen 30 sind an ihren Enden mit Ringen 34 versehen, durch die das Lamellenpaket 10 zusammengehalten wird. Die Hülsen 40 und die Ringe 34 können beispielsweise durch ein Kaltumformen oder einen Klippverschluss miteinander verbunden sein.

Die ersten Lamellensegmente 22, die zusammen eine Lage oder Schicht des Lamellenpakets 10 bilden, liegen auf den zweiten Lamellensegmenten 24 auf, wobei die zweiten Lamellenpakete 24 die Leerräume 19 zwischen den ersten Lamellenpaketen 22 überbrücken. Korrespondierend hierzu überbrücken die ersten Lamellensegmente 22 die nicht dargestellten Leerräume 19 zwischen den zweiten Lamellensegmenten 24. Hierdurch wird zwischen den ersten und zweiten Lamellensegmenten 22, 24 ein Verbund hergestellt, der ein hohes Maß an mechanischer Beanspruchbarkeit bietet. Zwischen den ersten und zweiten Lamellensegmenten 22, 24 wird so ein im Wesentlichen bogenförmiger Überlappungsbereich 40 ausgebildet. Der für die ersten und zweiten Lamellensegmente 22, 24 dargestellte Aufbau ist analog auch in weiteren Lagen oder Schichten von Lamellensegmenten 20 ausgebildet, wobei Lamellensegmente Leerräume 19 zwischen anderen Lamellensegmenten 20 überbrücken. Für den Aufbau gemäß FIG 1 ergibt sich ein Lamellenfüllgrad von 75%. Je höher die Anzahl an Ausnehmungen 28 je Lamellensegment 20 ist, umso höher ist der erzielbare Lamellenfüllgrad. Je höher der Lamellenfüllgrad ist, umso ähnlicher ist das Lamellenpaket 10 einem Lamellenpaket, das nur aus ringförmigen Lamellen ausgebildet ist. Dadurch, dass die Lamellensegmente 20 gemäß FIG 3 schnell und kostengünstig beispielsweise aus einem Rohblech herstellbar sind, ergibt sich ein besonders günstiges Verhältnis aus mechanischer Beanspruchbarkeit und Herstellungsaufwand bzw. Herstellungskosten.

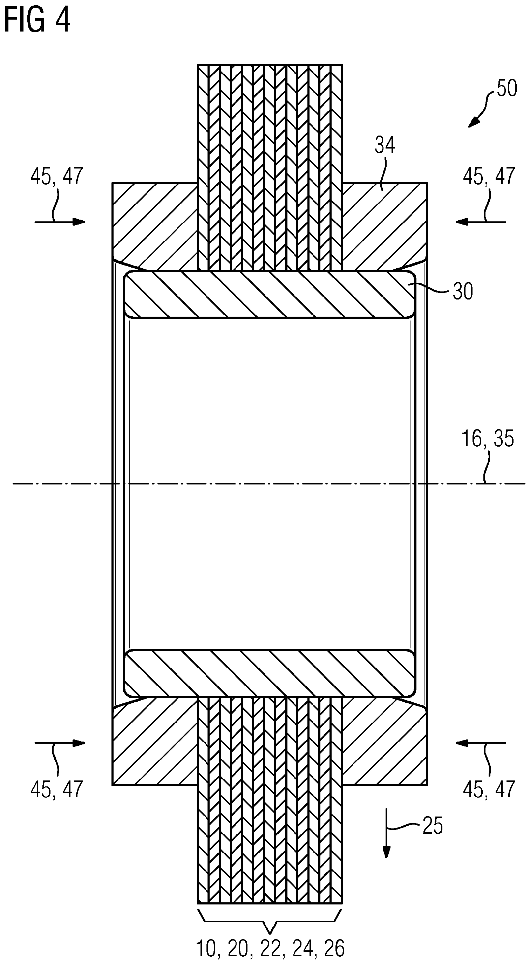

In FIG 4 ist ein Lamellenpaket 10 beispielsweise wie in FIG 3 schematisch in einem Längsschnitt dargestellt, das in einer Kupplung 50 einsetzbar ist. Das Lamellenpaket 10 umfasst eine Mehrzahl an Lamellensegmenten 20, die im Wesentlichen geschichtet angeordnet sind. Zu den Lamellensegmenten 20 gehören erste und zweite Lamellensegment 24, die jeweils sich ergänzende Ringsegmente 26 bilden. Im montierten Zustand wie in FIG 4 überlappen sich die ersten und zweiten Lamellensegmente 22, 24 derart, dass Leerräume von Lamellensegmenten 20 in benachbarten Lagen oder Schichten des Lamellenpakets 10 überbrückt werden. Dazu sind die Lamellensegmente 20 derart angeordnet, dass deren Ausnehmungen 28 fluchtend positioniert sind. Die Ausnehmungen 28 fluchten dabei jeweils zu einer Schraubenachse 35 in einer Hülse 30, die in den Ausnehmungen 28 aufgenommen ist. Die Hülsen 30 sind an ihren Enden mit Ringen 34 versehen, die mit der Hülse 30 verpresst sind, also durch Kaltverformung mit ihnen verbunden sind. Alternativ kann zwischen der Hülse 30 und dem Ringen 34 ein Klickverschluss ausgebildet sein.

Entlang der Schraubenachsen 35 sind in den Hülsen 30 Befestigungsmittel 16, wie beispielsweise Schrauben, lösbar aufnehmbar. Im Betrieb der Kupplung 50 wird in das Lamellenpaket 10 ein Drehmoment 25 eingeleitet, durch das die Lamellensegmente 20 im Wesentlichen einer Zugbeanspruchung unterworfen sind. Diese wird durch die Hülse 30 in das Lamellenpaket 10 eingeleitet, wobei die Hülse 30 durch eine Presskraft 45 an das Lamellenpaket 10 gedrückt wird. Hierdurch wird das Lamellenpaket 10 unter einer Vorspannung 47 gehalten. Ergänzend erfolgt die Kraftübertragung formschlüssig mit dem Befestigungsmittel und der Hülse.

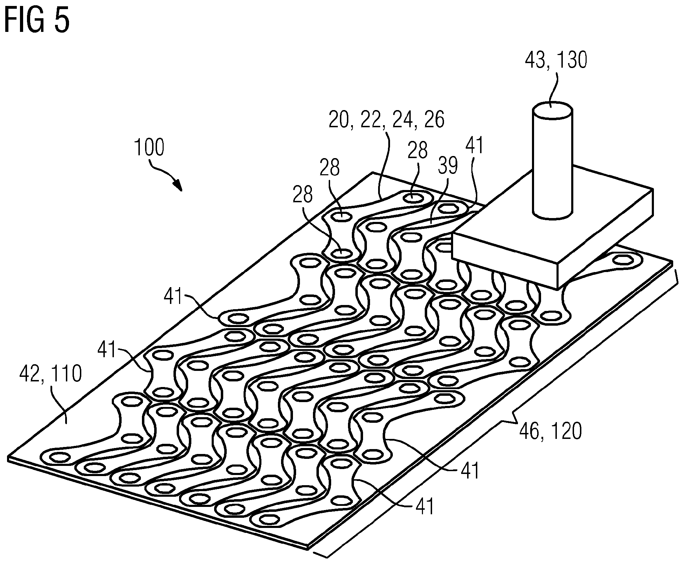

Eine erste Ausführungsform des beanspruchten Herstellungsverfahrens 100 ist in einer schematischen Schrägansicht in FIG 5 abgebildet. Das Verfahren 100 geht von einem ersten Schritt 110 aus, in dem ein Rohblech 42 bereitgestellt wird. Ebenso geht das Verfahren 100 in FIG 5 von einem zweiten Schritt 120 aus, in dem eine Mehrzahl an Konturen 41 an Lamellensegmenten 20 zu einem Trennmuster 46 für das Rohblech 42 zusammengestellt ist. Das Trennmuster 46 bildet somit eine Mehrzahl an Lamellensegmenten 20 ab, die als erste und zweite Lamellensegmente 22, 24 für ein Lamellenpaket 10, wie beispielsweise in FIG 1 bis FIG 4 geeignet sind. Dazu bilden die Lamellensegmente 20 im Wesentlichen sich gegenseitig ergänzende Ringsegmente 26. Die Konturen 41 von mehreren Lamellensegmenten 20 sind im Trennmuster 46 ineinander geschachtelt, also derart positioniert, dass ein dazwischenliegender Materialverschnitt 39 minimiert ist. Zu den Konturen 41 gehören dabei auch die Ausnehmungen 28. Das Trennmuster 46 ist durch einen Benutzer einstellbar oder durch einen entsprechenden Geometriealgorithmus erzeugbar. In einem weiteren Schritt 130 werden Lamellensegmente 20 durch ein Stempelwerkzeug 43 aus dem Rohblech 42 herausgetrennt. Infolgedessen ist das Material eines Rohblechs 42 verlustarm ausnutzbar, was eine besonders kosteneffiziente Herstellung erlaubt. Dies wiederum ermöglicht es, bei der Herstellung von Lamellensegmenten 20 leistungsfähigere und kostenintensivere Materialien wirtschaftlich einzusetzen, wodurch wiederum die Güte der Lamellensegmente 20, und damit des angestrebten Lamellenpakets 10, erhöht wird.

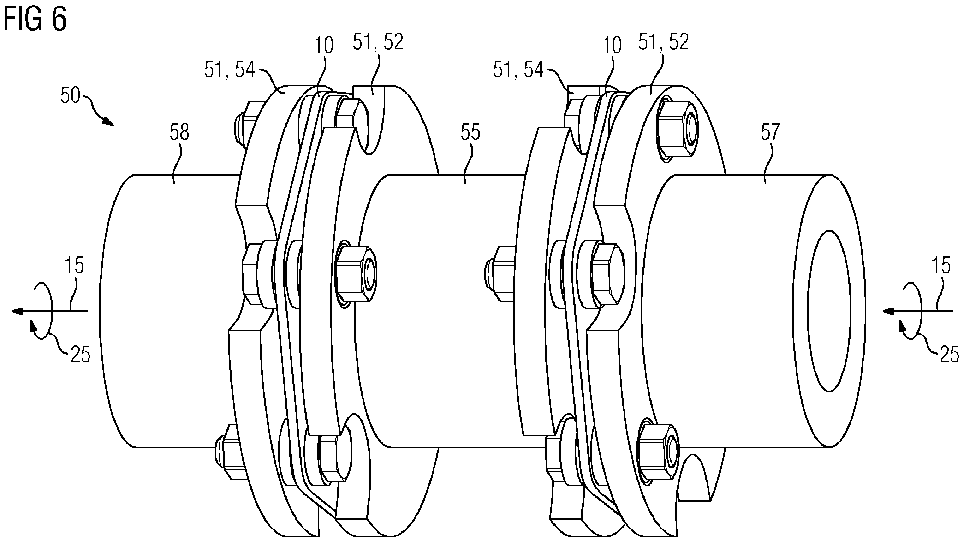

FIG 6 zeigt schematisch den Aufbau einer beanspruchten Kupplung 50, in der Lamellenpakete 10, wie beispielsweise in FIG 1 bis 4 gezeigt, eingesetzt wird. Die Kupplung 50 umfasst eine erste und eine zweite Nabe 57, über die Drehmoment 25 um eine Hauptdrehachse 15 zuführbar bzw. abführbar ist. Die Kupplung 50 umfasst auch ein Zwischenstück 55, das mit zwei Flanschen 51 versehen ist. Auch die erste und zweite Nabe 57, 58 sind mit jeweils einem Flansch 51 versehen. Ein Flansch 51 einer Nabe 57, 58 bildet mit je einem Flansch 51 des Zwischenstücks 55 ein Flanschpaar mit je einem ersten Flansch 52 und einem zweiten Flansch 54. Es ist jeweils ein erster Flansch 52 mit einem zweiten Flansch 54 über Befestigungsmittel 16 lösbar über ein Lamellenpaket 10 verbunden. Die Lamellenpakete 10 weisen jeweils eine Mehrzahl an Lamellensegmenten 20 auf, die im Wesentlichen als Ringsegmente 26 ausgebildet sind. Die Kupplung 50 gemäß FIG 6 ist insgesamt als Lamellenkupplung ausgebildet.

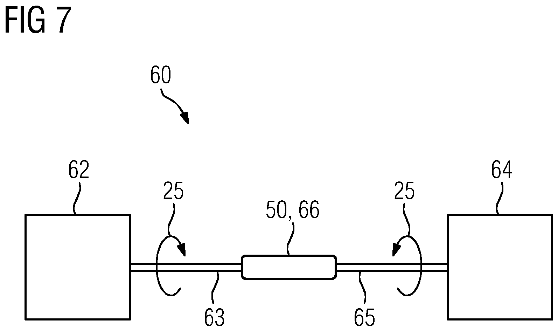

In FIG 7 ist schematisch der Aufbau einer Industrie-Applikation 60 nach einer beanspruchten Ausführungsform der Erfindung dargestellt. Die Industrie-Applikation 60 weist eine Antriebseinheit 62 und eine Abtriebseinheit 64 auf. Die Antriebseinheit 62 ist mit einer Antriebswelle 63 auf, über die ein von der Antriebseinheit 62 erzeugtes Drehmoment 25 zu einer Kupplung 66 übertragen wird. Die Kupplung 66 wiederum ist über eine Abtriebswelle 65 drehmomentübertragend mit der Abtriebseinheit 64 verbunden. Das Drehmoment 25 von der Antriebseinheit 62 wird so durch die Kupplung 66 auf die Abtriebseinheit 64 übertragen. Die Antriebseinheit 62 kann beispielsweise als Elektromotor, Verbrennungsmotor oder Hydraulikmotor ausgebildet sein. Die Abtriebseinheit kann als mechanische Anwendung ausgebildet sein, so dass die Industrie-Applikation beispielsweise als Mühle, Wälzmühle, Zementmühle, Zuckermühle, Extruder, Förderanlage, Gesteinsbrecher, Walzenbrecher, Walzenpresse, Rollpresse, Pumpe, Ventilator, Verdichter, Schiffsantrieb, Hebevorrichtung, Müllpresse oder Schrottpresse ausgebildet ist. Die Kupplung 66 ist dabei als eine Kupplung 50 gemäß einer der FIG 1 bis FIG 4 ausgebildet.

## Patentansprüche

1. Lamellenpaket (10), umfassend eine Mehrzahl an geschichtet angeordneten Lamellensegmenten (20, 22, 24), die zu einem gegenseitigen Verbinden als Ringsegmente (26) ausgebildet sind, die zu einer geschlossenen umlaufenden Außenkontur verbindbar sind, wobei in jedem Lamellensegment (20, 22, 24) eine Mehrzahl an Ausnehmungen (28) ausgebildet ist, und zumindest ein Lamellensegment (20) mindestens drei Ausnehmungen (28) aufweist, **dadurch gekennzeichnet, dass** das erste Lamellensegments (22) das zweite Lamellensegment (24) entlang einer Umfangsrichtung überragt.

2. Lamellenpaket (10) nach Anspruch 1, **dadurch gekennzeichnet, dass** ein erstes und ein zweites Lamellensegment (22, 24) teilweise überlappend an jeweils mindestens zwei Ausnehmungen (28) über je eine Hülse (30) miteinander verbunden sind.

3. Lamellenpaket (10) nach einem der Ansprüche 1 oder 2, **dadurch gekennzeichnet, dass** das Lamellenpaket (10) sechs, acht, zehn, oder zwölf Hülsen (30) aufweist.

4. Lamellenpaket (10) nach einem der Ansprüche 1 bis 3, **dadurch gekennzeichnet, dass** das Lamellenpaket (10) in einem Bogenabschnitt (17) zwischen zwei Hülsen (30) einen Lamellenfüllgrad von mindestens 60% aufweist.

5. Lamellenpaket (10) nach einem der Ansprüche 1 bis 4, **dadurch gekennzeichnet, dass** zumindest eine Hülse (30) einen von einer Kreisform abweichenden Querschnitt aufweist.

6. Lamellenpaket (10) nach einem der Ansprüche 1 bis 5, **dadurch gekennzeichnet, dass** zumindest eine Hülse (30) als Kragenhülse ausgebildet ist.

7. Lamellenpaket (10) nach einem der Ansprüche 1 bis 6, **dadurch gekennzeichnet, dass** das Lamellenpaket (10) ausschließlich Lamellensegmente (20, 22, 24) mit der gleichen Anzahl an Ausnehmungen (28) aufweist.

8. Lamellenpaket (10) nach einem der Ansprüche 1 bis 7, **dadurch gekennzeichnet, dass** das Lamellenpaket (10) Lamellensegmente (20, 22, 24) mit einer unterschiedlichen Anzahl an Ausnehmungen (28) aufweist.

9. Lamellenkupplung (50), umfassend einen ersten Flansch (52) und einen zweiten Flansch (54), die zu einer Drehmomentübertragung jeweils mit einem Lamellenpaket (10) lösbar verbunden sind, **dadurch gekennzeichnet, dass** das Lamellenpaket (10) nach einem der Ansprüche 1 bis 8 ausgebildet ist.

10. Industrie-Applikation (60), umfassend eine Antriebseinheit (62) mit einer Ausgangswelle (63) und eine Abtriebseinheit (64) mit einer Eingangswelle (65), die über eine Kupplung (66) drehmomentübertragend miteinander verbunden sind, **dadurch gekennzeichnet, dass** die Kupplung (66) als Lamellenkupplung (50) nach Anspruch 9 ausgebildet ist.

11. Industrie-Applikation (60) nach Anspruch 10, **dadurch gekennzeichnet, dass** die Abtriebseinheit (64) eine mechanische Anwendung ist, die als Mühle, Wälzmühle, Zementmühle, Zuckermühle, Extruder, Förderanlage, Gesteinsbrecher, Walzenbrecher, Walzenpresse, Rollpresse, Pumpe, Ventilator, Verdichter, Schiffsantrieb, Hebevorrichtung, Müllpresse oder Schrottpresse ausgebildet ist.

## Claims

1. Disc assembly (10), comprising a plurality of disc segments (20, 22, 24) which are arranged in layers and are designed for mutual connection in the form of ring segments (26) that can be connected to form a closed outer contour around the periphery, wherein a plurality of apertures (28) is formed in each disc segment (20, 22, 24), and at least one disc segment (20) has at least three apertures (28), **characterized in that** the first disc segment (22) projects beyond the second disc segment (24) in a circumferential direction.

2. Disc assembly (10) according to Claim 1, **characterized in that** a first and a second disc segment (22, 24) are partially overlappingly connected to one another at respectively at least two apertures (28) via a respective bushing (30).

3. Disc assembly (10) according to either of Claims 1 and 2, **characterized in that** the disc assembly (10) has six, eight, ten or twelve bushings (30).

4. Disc assembly (10) according to one of Claims 1 to 3, **characterized in that** the disc assembly (10) has a disc fill level of at least 60% in an arc segment (17) between two bushings (30).

5. Disc assembly (10) according to one of Claims 1 to 4, **characterized in that** at least one bushing (30) has a cross section which deviates from a circular shape.

6. Disc assembly (10) according to one of Claims 1 to 5, **characterized in that** at least one bushing (30) is in the form of a flanged bushing.

7. Disc assembly (10) according to one of Claims 1 to 6, **characterized in that** the disc assembly (10) exclusively has disc segments (20, 22, 24) with the same number of apertures (28).

8. Disc assembly (10) according to one of Claims 1 to 7, **characterized in that** the disc assembly (10) has disc segments (20, 22, 24) with a different number of apertures (28).

9. Multi-disc clutch (50), comprising a first flange (52) and a second flange (54), which are detachably connected respectively to a disc assembly (10) for the purpose of torque transmission, **characterized in that** the disc assembly (10) is designed according to one of Claims 1 to 8.

10. Industrial application (60), comprising a drive unit (62) with an output shaft (63) and an output unit (64) with an input shaft (65), which are connected to one another in a torque-transmitting manner via a clutch (66), **characterized in that** the clutch (66) is in the form of a multi-disc clutch (50) according to Claim 9.

11. Industrial application (60) according to Claim 10, **characterized in that** the output unit (64) is a mechanical application, which is in the form of a mill, a roller mill, a cement mill, a sugarcane mill, an extruder, a conveyor installation, a rock crusher, a roller crusher, a roller press, a roll press, a pump, a fan, a compressor, a ship drive, a lifting apparatus, a waste compactor or a scrap baling press.

## Revendications

1. Paquet de lamelles (10), comprenant une pluralité de segments de lamelles (20, 22, 24) agencés en couches, qui sont réalisés sous forme de segments d'anneau (26) pour une liaison mutuelle, qui peuvent être reliés en un contour extérieur périphérique fermé, une pluralité d'évidements (28) étant réalisée dans chaque segment de lamelle (20, 22, 24), et au moins un segment de lamelle (20) présentant au moins trois évidements (28), **caractérisé en ce que** le premier segment de lamelle (22) dépasse le deuxième segment de lamelle (24) le long d'une direction circonférentielle.

2. Paquet de lamelles (10) selon la revendication 1, **caractérisé en ce qu'**un premier et un deuxième segment de lamelle (22, 24) sont reliés l'un à l'autre en se chevauchant partiellement au niveau d'au moins deux évidements (28) chacun, par l'intermédiaire d'une douille (30) .

3. Paquet de lamelles (10) selon l'une quelconque des revendications 1 ou 2, **caractérisé en ce que** le paquet de lamelles (10) présente six, huit, dix ou douze douilles (30).

4. Paquet de lamelles (10) selon l'une quelconque des revendications 1 à 3, **caractérisé en ce que** le paquet de lamelles (10) présente un degré de remplissage des lamelles d'au moins 60 % dans une section arquée (17) entre deux douilles (30).

5. Paquet de lamelles (10) selon l'une quelconque des revendications 1 à 4, **caractérisé en ce qu'**au moins une douille (30) présente une section transversale différente d'une forme circulaire.

6. Paquet de lamelles (10) selon l'une quelconque des revendications 1 à 5, **caractérisé en ce qu'**au moins une douille (30) est réalisée sous forme de douille à collerette.

7. Paquet de lamelles (10) selon l'une quelconque des revendications 1 à 6, **caractérisé en ce que** le paquet de lamelles (10) présente exclusivement des segments de lamelles (20, 22, 24) ayant le même nombre d'évidements (28) .

8. Paquet de lamelles (10) selon l'une quelconque des revendications 1 à 7, **caractérisé en ce que** le paquet de lamelles (10) présente des segments de lamelles (20, 22, 24) ayant un nombre différent d'évidements (28).

9. Embrayage à lamelles (50), comprenant une première bride (52) et une deuxième bride (54), qui sont chacune reliées de manière détachable à un paquet de lamelles (10) pour une transmission de couple, **caractérisé en ce que** le paquet de lamelles (10) est réalisé selon l'une quelconque des revendications 1 à 8.

10. Application industrielle (60), comprenant une unité d'entraînement (62) avec un arbre de sortie (63) et une unité entraînée (64) avec un arbre d'entrée (65), qui sont reliées entre elles par l'intermédiaire d'un embrayage (66) pour la transmission du couple, **caractérisée en ce que** l'embrayage (66) est réalisé sous forme d'embrayage à lamelles (50) selon la revendication 9.

11. Application industrielle (60) selon la revendication 10, **caractérisée en ce que** l'unité entraînée (64) est une utilisation mécanique qui est réalisée sous forme de broyeur, de broyeur à cylindres, de broyeur à ciment, de broyeur à sucre, d'extrudeuse, d'installation de convoyage, de concasseur de roches, de concasseur à cylindres, de presse à cylindres, de presse à rouleaux, de pompe, de ventilateur, de compresseur, de propulsion navale, de dispositif de levage, de presse à déchets ou de presse à ferraille.
